# FASCICULE DE BREVET EUROPEEN

(11) **EP 3 145 756 B1**
(45) Date de publication et mention de la délivrance du brevet: **14.11.2018**
(21) Numéro de dépôt: 15725798.1
(22) Date de dépôt: 24.04.2015
(51) Int. Cl.: B60R 13/08, B62D 25/16

(54) **PROTECTEUR DE COURROIE POUR VÉHICULE AUTOMOBILE**
RIEMENSCHUTZ FÜR EIN KRAFTFAHRZEUG
BELT GUARD FOR A MOTOR VEHICLE

(30) Priorité: 19.05.2014 FR 1454434
(43) Date de publication de la demande: 29.03.2017
(73) Titulaire: PSA Automobiles SA, 78300 Poissy (FR)
(72) Inventeur: LUCCHINA, Nicolas, 90000 Belfort (FR); BERRE, Olivier, 25490 Fesches le Chatel (FR)
(74) Mandataire: Renous Chan, Véronique
(86) Numéro de dépôt international: PCT/FR2015/051121
(87) Numéro de publication internationale: WO 2015/177426

(56) Documents cités:
- EP-A1- 2 017 135
- FR-A1- 2 896 224
- FR-A1- 2 977 853

## Description

La présente invention porte sur un ensemble comportant un protecteur de courroie pour véhicule automobile, ainsi que sur le véhicule automobile correspondant.

De façon connue en soi, un pare-boue est positionné entre une roue du véhicule et le compartiment moteur. A cet effet, le pare-boue, constitué par exemple par un panneau en matière plastique ou en matière textile, est fixé par exemple sur une pièce de structure du véhicule. Lors du roulage du véhicule, la roue ainsi que l'arbre de transmission projettent vers le compartiment moteur des gravillons et de l'eau, notamment en cas de chaussée inondée ou de passage du véhicule dans un gué. Le pare boue limite les projections de l'eau et des gravillons vers des parties sensibles présentes dans le compartiment moteur, telles que la courroie d'entraînement d'accessoires.

Toutefois, malgré la présence du pare-boue, on a observé que dans certaines situations de vie, de l'eau pouvait accéder au compartiment moteur et entraîner un patinage de la courroie empêchant alors un redémarrage du moteur fonctionnant dans un mode d'arrêt et de redémarrage (ou mode "Stop and Start" en anglais).

Afin de résoudre ce problème, la demanderesse a alors développé un protecteur de courroie visant à éviter la pénétration d'eau sur lequel pourra être monté le pare-boue. Du fait des débattements et de l'architecture compacte du moteur, il existe une zone d'interférence entre le protecteur de courroie et le carter de la courroie de distribution. Dans cette zone d'interférence, des chocs peuvent survenir entre le carter de la courroie de distribution et le protecteur de courroie, ce qui entraîne des bruits parasites ainsi que des risques de détérioration du protecteur de courroie.

Le document FR2896224 décrit un pare-boue présentant une partie souple en forme d'accordéon permettant d'absorber les débattements de la transmission. Toutefois, du fait de la configuration de la partie souple issue d'un bord extrême du pare-boue, une telle pièce ne serait pas adaptée à être positionnée dans une zone d'interférence avec le carter de courroie. Le document EP2017135 montre un bouclier métallique comportant une partie rigide et une partie souple entourée par ladite partie rigide. Le document FR2977853 montre un pare-boue pour véhicule automobile, destiné à être fixé entre une roue du véhicule et le compartiment moteur.

L'invention a pour objet un ensemble comportant un protecteur de courroie contre les projection d'eau ou de gravillons, une roue et un carter de courroie d'un véhicule automobile, tel le protecteur de courroie est fixé entre la roue et le carter, tel que ledit protecteur de courroie comporte une partie rigide et une partie souple entourée par ladite partie rigide, ladite partie souple étant située dans une zone d'interférence entre ledit protecteur de courroie et ledit carter de courroie, de manière à pouvoir absorber des chocs entre ledit protecteur de courroie et ledit carter de courroie.

Ainsi, la réalisation bi-matière du protecteur de courroie permet de limiter les nuisances sonores et la détérioration du protecteur de courroie grâce à la partie souple permettant localement l'absorption des chocs avec le carter de la courroie, tout en garantissant la tenue géométrique sur son pourtour grâce à la présence de la partie rigide qui entoure la partie souple.

Selon une réalisation, la partie souple est réalisée dans un matériau thermoplastique.

Selon une réalisation, ladite partie rigide est réalisée dans un matériau en polyamide rigidifié par des fibres.

Selon une réalisation, ledit protecteur de courroie comporte des moyens de fixation sur un brancard du véhicule automobile.

Selon une réalisation, ledit protecteur de courroie comporte des moyens de fixation avec un pare-boue dudit véhicule automobile.

Selon une réalisation, ledit protecteur de courroie comporte un joint destiné à être plaqué contre une face d'un brancard dudit véhicule automobile.

Selon une réalisation, ledit protecteur de courroie comporte un moyen d'indexage dudit protecteur de courroie par rapport à une pièce de structure dudit véhicule automobile.

Selon une réalisation, ladite partie souple est soudée avec ladite partie rigide.

Selon une réalisation, ledit carter est un carter d'une courroie d'entraînement d'accessoires.

L'invention a également pour objet un véhicule automobile équipé d'au moins un ensemble tel que précédemment décrit.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en perspective du protecteur de courroie selon la présente invention ainsi que du carter de courroie et de l'arbre de transmission du véhicule;
La figure 2 est une vue en perspective du protecteur de courroie selon la présente invention implanté dans l'environnement du moteur;
La figure 3 est une vue en perspective de l'ensemble de la figure 2 depuis l'intérieur du véhicule;
La figure 4 est une vue en perspective de dessous de l'ensemble de la figure 2;
La figure 5 est une vue en perspective montrant le positionnement de la roue du véhicule par rapport à l'ensemble de la figure 2.

Les éléments identiques, similaires, ou analogues conservent la même référence d'une figure à l'autre.

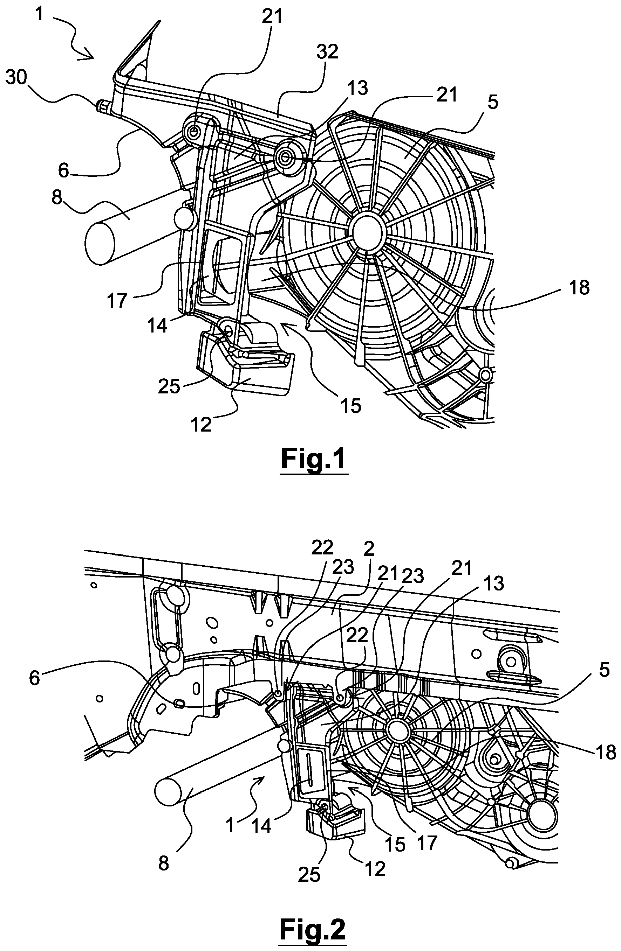

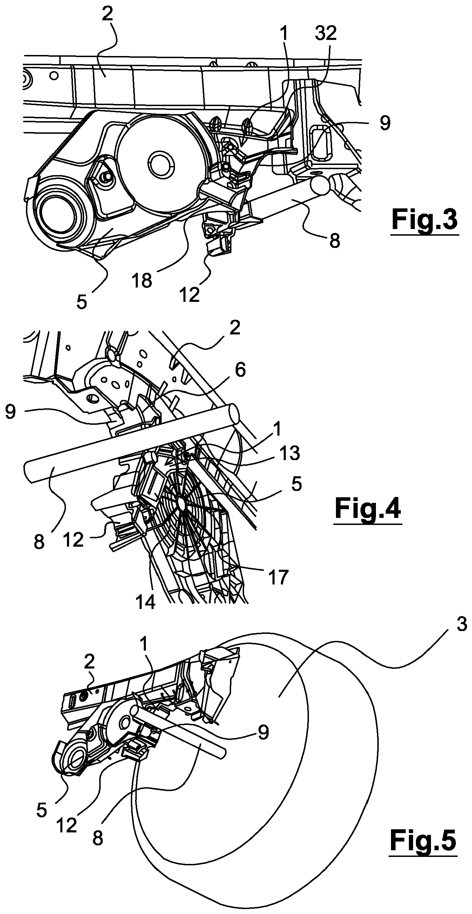

Les figures 1 à 5 montrent un protecteur de courroie 1 selon l'invention fixé sur un brancard 2 entre une roue 3, visible sur la figure 5, et un carter 5 d'une courroie d'entraînement d'accessoires du véhicule automobile. Dans la suite de la description, les termes relatifs du type "supérieur" ou "inférieur" sont entendus par rapport à un protecteur de courroie 1 monté sur le véhicule en position d'utilisation correspondant à la position montrée en figure 2.

Ce protecteur 1 présente en vue de face globalement une forme en T munie d'un bord 6 situé du côté de l'arbre de transmission 8 qui est incurvé. La forme de ce bord 6 est déterminée de manière à contourner un volume englobant toutes les positions possibles de la transmission 1 lors de son débattement.

Le protecteur de courroie 1 comporte une paroi principale s'étendant suivant un plan sensiblement perpendiculaire à l'axe de l'arbre de transmission 8. Le protecteur présente également un repli 9 (cf. figures 3 et 4) issu du bord incurvé 6 s'étendant vers l'intérieur du véhicule c'est-à-dire en direction du plan longitudinal médian du véhicule. Dans la partie inférieure du T, le protecteur de courroie 1 présente, s'il y a lieu, une forme saillante 12 définie de manière à contourner un capteur de hauteur de caisse (non représenté) utilisé pour modifier un réglage des phares du véhicule en fonction de la valeur retournée par le capteur.

En variante, le protecteur de courroie 1 pourra présenter toute autre forme adaptée à la configuration du véhicule lui permettant de ne pas interférer avec la transmission et d'autres pièces environnantes.

Le protecteur de courroie 1 comporte une partie rigide 13 et une partie souple 14 entourée par la partie rigide 13. La partie souple 14 est destinée à être située dans une zone d'interférence 15 entre le protecteur de courroie 1 et le carter 5, de manière à pouvoir absorber des chocs entre le protecteur de courroie 1 et le carter 5. En l'occurrence, la partie souple 14 est positionnée en regard d'une partie en saillie 18 de forme cylindrique venant de matière avec le carter 5 et assurant une protection d'un capteur du véhicule.

La partie souple 14 est réalisée dans un matériau déformable et élastique qui est tendu à la manière "d'une peau de tambour" pour permettre au protecteur de courroie 1 d'amortir les chocs sans se détériorer. La partie souple 14 est réalisée dans un matériau thermoplastique, par exemple en polyuréthanes de type PUR-T non chargée.

Afin d'assurer la fonction de protection contre les projections, la partie rigide 13 est réalisée dans une matière plastique suffisamment rigide pour résister aux pressions d'eau et au gravillonnage sans se déformer. La partie rigide 13 est ainsi de préférence réalisée dans un matériau en polyamide rigidifier par des fibres, par exemple de type PA6 GF35 (le nombre "35" correspondant au pourcentage de fibres dans la pièce). La partie rigide 13 garantit également la tenue géométrique du protecteur 1. La partie rigide 13 constitue de préférence plus de 70% en poids du protecteur de courroie 1.

Lors de la réalisation du protecteur de courroie 1, la partie rigide 13 est injectée dans un premier temps dans un moule. On injecte ensuite la matière thermoplastique dans la fenêtre 17 délimitée par la partie rigide 13 pour former la partie souple 14. Du fait de l'injection à haute température, le contour externe de la partie souple 14 vient se souder avec le bord interne de la partie rigide 13 délimitant la fenêtre 17.

Le protecteur de courroie 1 comporte en outre des moyens de fixation 21 sur le brancard 2 du véhicule automobile. En l'occurrence, ces moyens prennent la forme d'écrous 21 positionnés dans la partie supérieure du protecteur de courroie 1. Ces écrous 21 sont destinés à venir en regard d'ouvertures 22 réalisées dans des oreilles 23 issues du brancard 2 pour coopérer avec des goujons (non représentés) traversant les pièces.

Il comporte également des moyens de fixation 25 avec un pare-boue (non représenté) du véhicule automobile. En effet, le protecteur de courroie 1 présente une ouverture 25 destinée à venir en regard d'une ouverture correspondante réalisée dans le pare-boue pour permettre l'insertion d'un rivet par exemple en plastique. Le protecteur de courroie 1 assure ainsi également une fonction de maintien du pare-boue.

De préférence, comme on peut le voir sur la figure 1, on prévoit en outre un moyen d'indexage 30 du protecteur de courroie 1 par rapport à une pièce de structure du véhicule automobile. Le moyen d'indexage 30 est ici constitué par une protubérance, par exemple de forme cylindrique, destinée à coopérer avec une ouverture réalisée dans la pièce de structure. Ainsi, l'opérateur peut, une fois la protubérance 30 insérée dans l'ouverture correspondante, déplacer le protecteur 1 de manière que les écrous 21 se positionnent en regard des ouvertures 22 des oreilles 23 avant d'insérer les goujons de fixation. On assure ainsi un positionnement robuste et sous contrôle du protecteur de courroie 1 dans son environnement. Toutefois, le nombre et la forme des moyens d'indexage 30 pourront varier en fonction de l'application.

De préférence, un joint 32 issu d'un bord supérieur du protecteur 1 est destiné à être plaqué contre une face du brancard 2. Ce joint 32 présente une forme coudée de manière à s'étendre le long du repli 9. Cela permet d'éviter que de l'eau puisse s'introduire à l'intérieur du carter 5 de la courroie en passant entre le brancard 2 et le corps du protecteur de courroie 1.

En variante, le protecteur 1 pourrait être utilisé pour protéger une autre courroie d'entraînement, telle que la courroie de transmission.

Bien entendu, la description qui précède a été donnée à titre d'exemple uniquement et ne limite pas le domaine de l'invention dont on ne sortirait pas en remplaçant les détails d'exécution par tous autres équivalents.

## Revendications

1. Ensemble comportant un protecteur de courroie (1) contre les projections d'eau ou de gravillons, une roue (3) et un carter (5) de courroie d'un véhicule automobile, où le protecteur de courroie (1) est fixé entre la roue (3) et le carter(5), ledit protecteur de courroie (1) comportant une partie rigide (13) et une partie souple (14) entourée par ladite partie rigide (13), ladite partie souple (14) étant située dans une zone d'interférence (15) entre ledit protecteur de courroie (1) et ledit carter (5) de courroie, de manière à pouvoir absorber des chocs entre ledit protecteur de courroie (1) et ledit carter (5) de courroie.

2. Ensemble selon la revendication 1, **caractérisé en ce que** la partie souple (14) est réalisée dans un matériau thermoplastique.

3. Ensemble selon la revendication 1 ou la revendication 2, **caractérisé en ce que** ladite partie rigide (13) est réalisée dans un matériau en polyamide rigidifié par des fibres.

4. Ensemble selon l'une quelconque des revendications 1 à 3, **caractérisé en ce qu'**il comporte des moyens de fixation (21) sur un brancard (2) du véhicule automobile.

5. Ensemble selon l'une quelconque des revendications 1 à 4, **caractérisé en ce qu'**il comporte des moyens de fixation (25) avec un pare-boue du véhicule automobile.

6. Ensemble selon l'une quelconque des revendications 1 à 5, **caractérisé en ce qu'**il comporte un joint (32) destiné à être plaqué contre une face d'un brancard (2) du véhicule automobile.

7. Ensemble selon l'une quelconque des revendications 1 à 6, **caractérisé en ce qu'**il comporte un moyen d'indexage (30) dudit protecteur de courroie (1) par rapport à une pièce de structure du véhicule automobile.

8. Ensemble selon l'une quelconque des revendications 1 à 7, **caractérisé en ce que** ladite partie souple (14) est soudée avec ladite partie rigide (13).

9. Ensemble selon l'une quelconque des revendications 1 à 8, **caractérisé en ce que** ledit carter (5) est un carter d'une courroie d'entraînement d'accessoires.

10. Véhicule automobile équipé d'un ensemble défini selon l'une quelconque des revendications précédentes.

## Patentansprüche

1. Baugruppe, die einen Riemenschutz (1) vor Wasser- oder Kiesspritzern, ein Rad (3) und ein Riemengehäuse (5) eines Kraftfahrzeugs umfasst, wobei der Riemenschutz (1) zwischen dem Rad (3) und dem Gehäuse (5) befestigt ist, wobei der Riemenschutz (1) einen starren Teil (13) und einen geschmeidigen Teil (14), der von dem starren Teil (13) umgeben ist, umfasst, wobei der biegsame Teil (14) in einer Interferenzzone (15) zwischen dem Riemenschutz (1) und dem Riemengehäuse (5) liegt, so dass Stöße zwischen dem Riemenschutz (1) und dem Riemengehäuse (5) absorbiert werden können.

2. Baugruppe nach Anspruch 1, **dadurch gekennzeichnet, dass** der geschmeidige Teil (14) aus einem Thermoplastmaterial hergestellt ist.

3. Baugruppe nach Anspruch 1 oder Anspruch 2, **dadurch gekennzeichnet, dass** der starre Teil (13) aus einem Material aus faserversteiftem Polyamid hergestellt ist.

4. Baugruppe nach einem der Ansprüche 1 bis 3, **dadurch gekennzeichnet, dass** sie Mittel zum Befestigen (21) auf einem Längsträger (2) des Kraftfahrzeugs umfasst.

5. Baugruppe nach einem der Ansprüche 1 bis 4, **dadurch gekennzeichnet, dass** sie Mittel zum Befestigen (25) mit einem Schmutzfänger des Kraftfahrzeugs umfasst.

6. Baugruppe nach einem der Ansprüche 1 bis 5, **dadurch gekennzeichnet, dass** sie eine Dichtung (32) umfasst, die dazu bestimmt ist, gegen eine Seite eines Längsträgers (2) des Kraftfahrzeugs gedrückt zu sein.

7. Baugruppe nach einem der Ansprüche 1 bis 6, **dadurch gekennzeichnet, dass** sie ein Positionierungsmittel (30) des Riemenschutzes (1) in Bezug auf ein Strukturteil des Kraftfahrzeugs umfasst.

8. Baugruppe nach einem der Ansprüche 1 bis 7, **dadurch gekennzeichnet, dass** der geschmeidige Teil (14) mit dem starren Teil (13) verschweißt ist.

9. Baugruppe nach einem der Ansprüche 1 bis 8, **dadurch gekennzeichnet, dass** das Gehäuse (5) ein Gehäuse eines Zubehörantriebsriemens ist.

10. Kraftfahrzeug, das mit einer Baugruppe ausgestattet ist, die nach einem der vorhergehenden Ansprüche definiert ist.

## Claims

1. An assembly comprising a belt guard (1) against splashes of water or gravel, a wheel (3) and a belt housing (5) of a motor vehicle, in which the belt guard (1) is attached between the wheel (3) and the housing (5), said belt guard (1) comprising a rigid portion (13) and a flexible portion (14) surrounded by said rigid portion (13), said flexible portion (14) being situated in an interference area (15) between said belt guard (1) and said belt housing (5), so as to be able to absorb shocks between said belt guard (1) and said belt housing (5).

2. The assembly according to Claim 1, **characterized in that** the flexible portion (14) is made from a thermoplastic material.

3. The assembly according to Claim 1 or Claim 2, **characterized in that** said rigid portion (13) is made from a polyamide material stiffened by fibres.

4. The assembly according to any one of Claims 1 to 3, **characterized in that** it comprises attachment means (21) on a side rail (2) of the motor vehicle.

5. The assembly according to any one of Claims 1 to 4, **characterized in that** it comprises attachment means (25) with a mudguard of the motor vehicle.

6. The assembly according to any one of Claims 1 to 5, **characterized in that** it comprises a gasket (32) intended to be pressed against a face of a siderail (2) of the motor vehicle.

7. The assembly according to any one of Claims 1 to 6, **characterized in that** it comprises an indexing means (30) of said belt guard (1) with respect to a structural part of the motor vehicle.

8. The assembly according to any one of Claims 1 to 7, **characterized in that** said flexible portion (14) is welded with said rigid portion (13).

9. The assembly according to any one of Claims 1 to 8, **characterized in that** said housing (5) is a housing of an accessories drive belt.

10. A motor vehicle equipped with an assembly defined according to any one of the preceding claims.
